# EUROPEAN PATENT APPLICATION

(11) **EP 2 741 518 A1**
(43) Date of publication of application: **11.06.2014**
(21) Application number: 12306507.0
(22) Date of filing: 04.12.2012
(51) Int. Cl.: H04N 21/8549, H04N 21/431, H04N 21/2343, H04N 21/6587, H04N 21/2387, H04N 21/472

(54) **Method for rendering a multimedia asset, a related system, media client and related media server**

(71) Applicant: Alcatel Lucent, 75007 Paris (FR)
(72) Inventor: Lou, Zhe, 2640 Mortsel (BE); Van Den Broeck, Marc, 2860 Sint-Katelijne-Waver (BE); De Schepper, Koen, 2650 Edegem (BE)
(74) Representative: ALU Antw Patent Attorneys

(57) **Abstract**

The present invention relates to a multimedia asset rendering method, for rendering a multimedia asset by a media client which multimedia asset is being provided by a media server, the media client being coupled to the media server over a communications network. The method comprises the steps of the media client sending a content skip-request towards the media server, where the content-skip request indicates the skipped content of the multimedia asset and at receipt of the content skip-request the media server generates a summary of the skipped content of the multimedia asset; and subsequently the multimedia server providing the media client with the summary of the skipped content of the multimedia asset.

## Description

The present invention relates to a Method for rendering a multimedia asset as described in the preamble of claim 1, a system for rendering a multimedia asset as described in the preamble of claim 6, a related media client as described in the preamble of claim 8 and a related Media server as described in the preamble of claim 11.

Such a method for playing or rendering a multimedia asset at a media client is already well known in the art. Today, more and more people watch video from the Internet using a media client for instance being a personal computer, a networked television application, a mobile phone with a media player etc. For some larger media assets like movies or videos, people tend to jump from one segment to another to watch the most interesting part or just skip some boring parts of the movie.

Disadvantageously people do not know in advance whether or not a fragment they skip to is interesting as there is no preview information available in advance.

An objective of the present invention is to provide a method and related system for playing a multimedia asset of the above known type but wherein a user of such method and system is enabled to be aware of the content of the skipped parts of the multimedia asset currently played out.

According to an embodiment, the invention provides with a Multimedia asset rendering method, for rendering a multimedia asset by a media client where the multimedia asset is being provided to the media client by a media server. The media client being coupled to the media server over a communications network. This method comprises the steps of the media client sending a content skip-request towards the media server, where the skip request indicates the skipped content of the multimedia asset; and at receipt of the content skip-request the media server is adapted to generate a summary of the skipped content of the multimedia asset; and subsequently the multimedia server provides the media client with the summary of the skipped content of the multimedia asset.

According to this method at first a media client, at skipping content of the multimedia asset, the media client sends a content skip-request towards the media server, where the content skip-request message indicates the skipped content of the multimedia asset. At receipt, at the media server of the content skip-request, the media server generates a summary of the skipped content of the multimedia asset and subsequently the media server provides the multimedia client with the summary of the skipped content of the multimedia asset.

The skipped content of the multimedia asset for instance may be defined first by identification of the multimedia asset and additionally by means of a starting time and end-time of the skipped content of the multimedia asset.

An alternative is to provide users with "scene" separator so that they can decide to skip the current scene and jump to the next one or alternatively with a button indicating jump to the next film scene..

According to a preferred embodiment, the summary of the skipped content of the multimedia asset is presented at the media client so that the user of the media rendering client can be aware of the contents or gist of the skipped content of the multimedia asset currently being rendered.

According to another embodiment the presenting of the summary of the skipped content of the multimedia asset at the media client is effected by rendering the summary during a re-buffering period for reloading the content of the multimedia asset after skipping the content.

The multimedia client may render the summary at receipt of this summary immediately during the period that the multimedia client still is re-buffering the multimedia asset, meaning that the part of the multimedia asset after skipping the content still is being loaded at the multimedia client but not yet available for resuming the rendering the multimedia asset after skipping the content.

Hence during the period of re-buffering the rendering of the summary of the skipped content of the multimedia asset provides the user of the media rendering client with an abstract of the skipped video segment. Therefore such user will be able to become aware of the gist or contents of the skipped content of the multimedia asset currently being rendered at a display of or coupled to the media client.

An additional advantage of this embodiment is that the re-buffering time is used for presenting the generated summary instead of presenting the viewer with only message that re-buffering occurs, and hence this solution also reduces the time viewers usually waste by waiting during the video buffering while at the same time this re-buffering periods is utilized by filling in this period with a presentation of the foregoing skipped content of the multimedia asset.

Re-buffering means that a video player clears out the already downloaded video segments and starts to buffer the newly requested video segments. The "rebuffering time" typically refers to the freeze of the video playout during the "rebuffering" period.

A further embodiment is that the presenting the summary of the skipped content of said multimedia asset is effected in overlay to the resumed rendering of said multimedia asset.

Hence the generated summary of the skipped content of the multimedia asset is presented in overlay to the resumed rendering of the multimedia asset.

The summary can be displayed independently as well.

A still further embodiment is that the providing of the media client with the summary of the skipped content of the multimedia asset is performed over the communications network coupling the media client and media server.

Alternatively the providing of the media client with the summary of the skipped content of the multimedia asset could be performed over the Internet, Intranet or even a home network. The providing of the summary could be carried within the original media delivery session or in a separated delivery session.

Alternatively the providing of the media client with the summary of the skipped content of the multimedia asset could be performed in a local machine when the whole multimedia asset is co-located with the media client.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

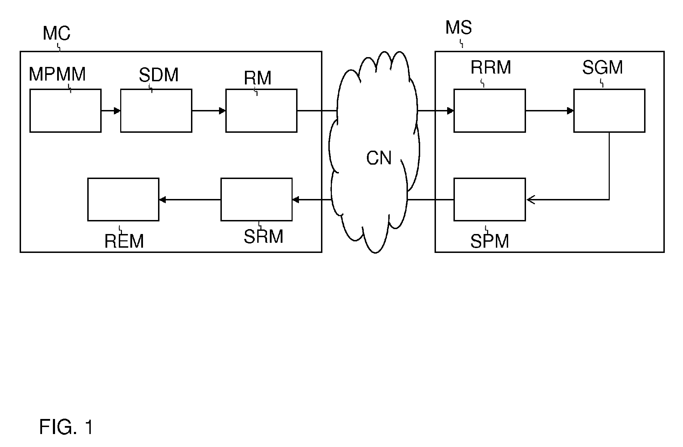

Fig. 1 represents a schematic diagram of the multimedia rendering system wherein the rendering of a multimedia asset by a media client according to the present invention is executed.

In the following paragraphs, referring to the drawing in FIG.1, an implementation of the multimedia asset rendering system is described. In the second paragraph, all connections between mentioned elements are defined.

Subsequently all relevant functional means of the mentioned multimedia rendering system as presented in FIG.1 are described followed by a description of all interconnections. In the succeeding paragraph the actual execution of the communication system is described.

A first essential element of this embodiment of the present invention is a media client MC for rendering a media asset that is provided by a media server MS by means of streaming. Although such a system usually includes a plurality of media clients coupled to such a media server, in the current embodiment only one media client MC is presented. Such a media client MC may be an internet connected personal computer supporting media transportation technologies RTP/RTSP, RTMP, HTTP streaming, etc. and media rendering applications such as Flash Player, QuickTime, Windows Media Player, Web Browsers like IE, Firefox, Chrome, etc. Some well-known websites like YouTube, Facebook, etc. are using these kinds of technologies and applications to present videos to their clients.

The second essential element is a media server MS that is able to provide media assets to the media client MC. The media clients of a plurality of such media clients are coupled to the media server MS over a communications network CN.

The providing of the media asset from the media server to the media client can be dealt with by real time streaming technologies like RTP/RTSP, RTMP, HTTP streaming, etc.

The Media client MC in this embodiment is coupled to the media server MS over the communications network CN. Depending on the type of media client MC, e.g. a mobile or fixed device the communications interface towards the communications network may be different. The communications network may include a core internet network in concatenation with an access network and or a home network including wired and/or wireless connections.

Alternatively, in case the media client MC is a mobile device the communications network includes wireless network interfaces like GSM, UMTS, LTE, WIFI, Bluetooth, etc. or other suitable communications networks.

The Media Client MC, for rendering a media asset, first comprises a Media Playout Monitoring means MPMM for monitoring the playback status and the user interactions like pause, fast-forward, repositioning, etc. The MPMM is typically a software module responsible for monitoring an integrated or loosely coupled input device, like mouse, keyboard or other devices. Further, the media client MC may comprise a skip request detection means SDM, for detecting skip-request signal and determining the relevant data concerning the skip request where such relevant data may include, but is not necessarily limited to, an identification of the multimedia asset, the start time and the stop time of the skipped content of the multimedia asset. Additionally the media client MC comprises a requesting means RM for sending a content skip-request towards the media server MS, where the skip-request indicates the content of the multimedia asset skipped for instance by including identification of the multimedia asset, the start time and the stop time of the skipped content of the multimedia asset in the skip-request, and furthermore the media client MC may include a summary receiving means SRM for receiving a summary of the skipped content of the multimedia asset provided by the media server. Additionally, the media client MC may comprise a rendering means REM for presenting the summary of the skipped content of the multimedia asset at the media client MC where the rendering means REM may be an integrated or coupled screen with or without integrated or coupled speakers.

The Media Playout Monitoring means MPMM has an input-terminal that is at the same time an input-terminal of the media client The Media Playout Monitoring means MPMM is coupled to skip request detection means SDM that in turn is coupled to the requesting means RM. The requesting means has an output-terminal that is at the same time an output-terminal of the media client MC. The summary receiving means SRM has an input-terminal that is at the same time an input-terminal of the media client MC. The summary receiving means SRM additionally is coupled to the rendering means REM.

The Media server MS, first comprises a skip request Receiving means RRM for receiving the content skip-request forwarded by the media client MC and a summary generating means SGM for at receipt of the skip-request forwarded by the media client MC the media server MS generating a summary of the skipped content of the multimedia asset. Such summary of the skipped content of the multimedia asset can be generated applying various technologies to implement the video summarization function. Below an enumeration of examples for generating such summary:
- Generating a summary of the skipped content of the multimedia asset based on a series of still images based on key frames
- Generating a summary of the skipped content of the multimedia asset by creating a montage of still images (synopsis mosaics)
- Generating a summary of the skipped content of the multimedia asset by collecting short clips (video skimming)
- Generating a summary of the skipped content of the multimedia asset based on fast forwarding (2X, 4X, 8X, etc.)
- Generating a summary of the skipped content of the multimedia asset by creating a montage of moving images
- Generating a summary of the skipped content of the multimedia asset by constructing still images with only the subtitles
- Generating a summary of the skipped content of the multimedia asset by constructing only the text summary. This text summary could be derived from the subtitles. It could also be derived from the prepared shots/scenes summaries originally generated by the content producer.

Additionally the media server includes a summary providing means SPM for providing the media client MC with the summary of the skipped content of the multimedia asset.

The request Receiving means RRM has an input-terminal that is at the same time an input-terminal of the media server MS. The request receiving means RRM is coupled to the summary generating means SGM that in turn is coupled to the summary providing means SPM. The service provisioning means SPM has an output-terminal that is at the same time an output-terminal of the media server MS

In order to explain the execution of the present invention it is assumed that a user of the media client MC, the media client in this embodiment being a personal computer having a video rendering application installed, e.g. using YOUTUBE video rendering functionality or browsing the internet using a web browser like Internet Explorer, Chrome, Firefox or the like for browsing websites providing e.g. video content like YOUTUBE website or AOL website, BBC/CNN, etc.

Currently a certain media asset being a video on a certain topic is being streamed from YouTube and a YouTube media server MS. The video on the meant topic, being stored at the media asset repository (not shown in FIG.1) that is included in the media server MS, is provided to media client MC by means of streaming. The video is received at the media client MC and rendered at a display that is coupled to the media client MC. Now, it is further assumed that the watching user wishes to skip a part, e.g. a chapter or a fragment or of the multimedia asset currently being streamed as he is looking for a certain part of information a certain scene.

Therefore the user, with a mouse coupled to the media client MC, i.e. the personal computer points at a later point of time on the progress bar of the video rendering application and skips a part of the currently rendered multimedia asset. The later point of time indicates a later fragment of the YouTube video on the certain topic.

The Media Playout Monitoring means MPMM of the media client MC being the application running on the media client MC for monitoring the playing status, e.g. the current playing time and the repositioning time. The current playing time is the media playout time and the repositioning time indicates the repositioning location.

Further the skip request detection means SDM of the media client detects the "content-skip" event being the mouse click of the user pointing at a later fragment or scene of the multimedia asset currently being rendered..

For instance if the repositioning time is more than T seconds larger than the current time, then a "content-skip" event is identified. The value of T is varied based on different applications' requirements.

The skip request detection means SDM, detects skip-request signal and additionally determines the relevant data concerning the skip request where such relevant data may include, but is not necessarily limited to, an identification of the multimedia asset, the start time and the stop time of the skipped content of the multimedia asset.

Subsequently, the requesting means RM transmits a content skip-request towards said media server MS where the skip request indicates the content of the multimedia asset skipped. The content-skip message may be formulated in the format of XML or other text format. The formulated content-skip message may contain the keyword SKIP, an Identification or name of the video and the start and stop times. This request message will be sent to the server via http or any other suitable network communication protocols. At the same time the client application running at the media client MC should "pause" the display of the video if the repositioning goes beyond the local buffer filling. In this case, the client application has to pause as the buffer does not yet contain the part of the multimedia asset after the skipped content. If the repositioning doesn't go out of the local buffer filling, the client application optionally may deliberately pause the video playing and wait for the summary that will be generated by the server.

In the mean time the skip request Receiving means RRM of the media server MS receives the content skip-request forwarded by the media client MC. The received content-skip request subsequently is handed over to the summary generating means SGM of the media server MS.

The skip request Receiving means RRM deals with handling of the request in terms of receiving the request and fetching important parameters (e.g. the Identification or name of the video, the start and stop times, etc.) from the received message.

The summary generating means SGM, at receipt of the skip-request forwarded by the media client MC generates a summary of the skipped content of the multimedia asset. In this embodiment the summary is generated based on the received identification of the multimedia asset, the start time and the end time of the skipped content of the multimedia asset. In this embodiment it is assumed that the summary generating means SGM, generates a summary of the skipped content of the multimedia asset based on a series of still images based on key frames of the skipped content of the multimedia asset.

Alternatively, such summary of the skipped content of the multimedia asset can be generated applying various technologies to implement the video summarization
- Generating a summary of the skipped content of the multimedia asset based on a series of still images based on key frames
- Generating a summary of the skipped content of the multimedia asset by creating a montage of still images (synopsis mosaics)
- Generating a summary of the skipped content of the multimedia asset by collecting short clips (video skimming)
- Generating a summary of the skipped content of the multimedia asset based on fast forwarding (2X, 4X, 8X, etc.)
- Generating a summary of the skipped content of the multimedia asset by creating a montage of moving images
- Generating a summary of the skipped content of the multimedia asset by constructing still images with only the subtitles
- Generating a summary of the skipped content of the multimedia asset by constructing only the text summary. This text summary could be derived from the subtitles. It could also be derived from the prepared shots/scenes summaries originally generated by the content producer.

At completion of the generated summary of the skipped content of the multimedia asset, the summary providing means SPM provides the media client MC with this generated summary which includes a series of still images based on key frames of the skipped content of the multimedia asset. The generated summary is sent towards the media client via the original media delivery session or a separated delivery session by using any of the transportation protocol, e.g. HTTP, RTP, RTMP, etc.

One example of such mechanism can be illustrated via a web browser with embedded video player. With HTML5, the embedded video player is able to receive streaming from a media server. For media summaries, it is possible to re-use the same session for the media delivery or use another technology like websocket to deliver the summary from the media server to the media client.

Subsequently the summary receiving means SRM of the media client MC receives the summary of the skipped content of the multimedia asset provided by the media server MS and forward the generated summary to the summary presenting means SPM for presenting the summary of the skipped content of the multimedia asset at the media client MC where the rendering means REM may be an integrated or coupled screen with or without integrated or coupled speakers.

Subsequently the rendering means REM displays the summary. Once the client application receives a summary from the server side, it is able to play it back before starting the next video segment.

The video play only gets resumed after the client application displays the received summary.

It is to be noted that additionally it is also possible to take advantages of the duration of the video summary generation in which period advertisements can be injected and rendered at the rendering means REM.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Multimedia asset rendering method, for rendering a multimedia asset by a media client (MC) said multimedia asset being provided by a media server (MS), said media client (MC) being coupled to said media server (MS) over a communications network (CN), **CHARACTERISED IN THAT** said method comprises the following steps:
a. said media client (MC) sending a content skip-request towards said media server (MS), said skip request indicating the skipped content of said multimedia asset; and
b. at receipt of said content skip-request said media server (MS) generating a summary of said skipped content of said multimedia asset; and
c. said multimedia server (MS) providing said media client (MC) with said summary of said skipped content of said multimedia asset.

2. Multimedia asset rendering method according to claim 1, **CHARACTERISED IN THAT** said method further comprises the step of presenting said summary of said skipped content of said multimedia asset at said media client (MC).

3. Multimedia asset rendering method according to claim 2, **CHARACTERISED IN THAT** said step of presenting said summary of said skipped content of said multimedia asset at said media client (MC) is effected by rendering said summary during a re-buffering period for reloading said content of said multimedia asset after skipping said content.

4. Multimedia asset rendering method according to claim 2, **CHARACTERISED IN THAT** said step of presenting said summary of said skipped content of said multimedia asset is effected in overlay to the resumed rendering of said multimedia asset.

5. Multimedia asset rendering method according to claim 1, **CHARACTERISED IN THAT** said step of providing said media client (MC) with said summary of said skipped content of said multimedia asset is performed over said communications network (CN).

6. Multimedia asset rendering system, said system comprising a media server (MS) for providing a multimedia asset to a media client (MC), said media client (MC) being coupled to said media server (MS) over a communications network (CN), **CHARACTERISED IN THAT** said system comprises:
a. requesting means (RM) in said media client (MC) for sending a content skip-request towards said media server (MS), said skip request indicating the content of said multimedia asset skipped; and
b. summary generating means (SGM) for at receipt of said skip-request said media server generating a summary of said skipped content of said multimedia asset; and
c. summary providing means (SPM) for providing said media client (MC) with said summary of said skipped content of said multimedia asset.

7. Multimedia asset rendering system according to claim 6, **CHARACTERISED IN THAT** said system further comprises presenting means (PM) for presenting said summary of said skipped content of said multimedia asset at said media client (MC).

8. Media Client for use in a Multimedia rendering system, said system comprising a server (MS) for providing a multi-media asset to said media client (MC), said media client (MC) being coupled to said media server (MS) over a communications network (CN), **CHARACTERISED IN THAT** said media client (MC) comprises:
a. requesting means (RM) for sending a content skip-request towards said media server, said skip request indicating the content of said multimedia asset skipped ; and
b. summary receiving means (SRM) for receiving a summary of said skipped content of said multimedia asset provided by said media server (MS).

9. Media Client according to claim 8, **CHARACTERISED IN THAT** said media client further comprises presenting means (PM) for presenting said summary of said skipped content of said multimedia asset at said media client (MC).

10. Media Client according to claim 8, **CHARACTERISED IN THAT** said content skip request includes an identification of said multimedia asset rendered, the starting time of said skipped content of said multimedia asset rendered and a stop time of said skipped content of said multimedia asset rendered.

11. Media Server (MS) for use in a Multimedia asset rendering system, said system comprising said server (MS) for providing a multi-media asset to a media client (MC), said media client (MC) being coupled to said media server (MS) over a communications network (CN), **CHARACTERISED IN THAT** said media server (MS) comprises:
a. a summary generating means (SGM) for at receipt of a skip-request forwarded by said media client (MC) said media server generating a summary of said skipped content of said multimedia asset; and
c. summary providing means (SPM) for providing said media client (MC) with said summary of said skipped content of said multimedia asset.
